# FASCICULE DE BREVET EUROPEEN

(11) **EP 1 813 470 B1**
(45) Date de publication et mention de la délivrance du brevet: **08.10.2008**
(21) Numéro de dépôt: 07290107.7
(22) Date de dépôt: 26.01.2007
(51) Int. Cl.: B60N 2/30, B60N 2/36, B60N 2/70

(54) **Elément de siège possédant une plaque de renfort et siège de véhicule automobile équipé d'un tel élément**
Sitzelement mit Verstärkungsplatte, und Fahrzeugsitz mit solchem Sitzelement
Seat element having a reinforcement plate and vehicule seat with such element

(30) Priorité: 27.01.2006 FR 0650307
(43) Date de publication de la demande: 01.08.2007
(73) Titulaire: Heuliez, 79140 Cerizay (FR)
(72) Inventeur: Leclerre, Frédéric, 91300 Massy (FR); Sik, Serge, 77600 Bussy Saint George (FR)
(74) Mandataire: Bredema

(56) Documents cités:
- EP-A- 0 037 773
- FR-A1- 2 826 321
- US-A1- 2002 067 056

## Description

L'invention concerne un élément de siège tel qu'une assise ou un dossier de siège et un siège transformable de véhicule automobile équipé d'un tel élément de siège.

L'invention concerne plus particulièrement les sièges transformables comportant des éléments de siège, assise et/ou dossier, montés articulés sur le piètement dudit siège entre une position d'utilisation dans laquelle la surface d'assise ou de dossier est disposée pour la réception d'un passager et une position retournée dans laquelle la surface d'assise et/ou de dossier est basculée en regard du plancher.

Le document FR-A-2 871 417 décrit notamment un siège transformable permettant de prendre différentes conformations dans lesquelles la surface d'assise et/ou de dossier est disposée en regard du plancher. Lorsque le siège est disposé dans une conformation plane, la surface d'assise et la surface de dossier sont disposées contre le plancher du véhicule de façon à augmenter considérablement l'espace de rangement des bagages. Dans cette conformation, la face inférieure de l'assise ou la face arrière du dossier forme le plancher du véhicule et permet la réception d'objets ou le passage d'utilisateurs.

En outre, lorsque le siège est disposé dans une conformation dite « tablette », la face arrière du dossier peut être utilisée pour la réception d'objet. Par conséquent, la face arrière du dossier et/ou la face inférieure de l'assise doit posséder une résistance à l'enfoncement suffisante pour supporter des charges lourdes sans endommagement de ladite assise ou dudit dossier.

Afin de résoudre ce problème, il est connu dans l'art antérieur de proposer des éléments de siège, tels qu'une assise ou un dossier, composés d'une structure de support de coussin dont la face opposée au coussin est renforcée par une plaque rigide. La plaque rigide possède une résistance suffisante pour permettre la réception d'objets lourds ou le passage de personnes.

Cependant, lorsque la structure de support de coussin possède une plaque rigide, le confort du siège est affecté. En effet, dans ce cas, le coussin repose directement sur la plaque rigide et le siège ne possède pas de dispositif de suspension permettant d'augmenter les performances d'amortissement Ainsi, le confort du siège est amoindri. Certes, il est également possible d'augmenter l'épaisseur du coussin afin d'améliorer le confort du siège. Cependant, dans ce cas, l'encombrement du siège est alors augmenté et l'espace disponible de l'habitacle est restreint. Ainsi, lorsque les sièges sont par exemple dans une configuration plane, l'espace disponible pour le rangement des bagages est amoindri.

Le document EP 0 337 773 décrit une assise de siège pour véhicule automobile comportant une structure de support supportant un coussin qui comprend un cadre présentant une ouverture et une plaque rigide recouvrant au moins une partie de ladite ouverture, montée sur le cadre au moyen d'un dispositif de suspension élastique.

L'invention vise à remédier à ces problèmes en proposant un élément de siège, tel qu'une assise ou un dossier, dont la face opposée au coussin permet de supporter des charges lourdes sans affecter le confort du siège ni augmenter l'épaisseur du coussin.

A cet effet, et selon un premier aspect, l'invention propose un élément de siège, tel qu'une assise ou un dossier de siège pour véhicule automobile, comportant une structure de support supportant un coussin ; ladite structure de support étant renforcée par une plaque de renfort. La structure de support comprend un cadre présentant une ouverture, la plaque de renfort recouvrant au moins une partie de ladite ouverture. La plaque de renfort est montée sur le cadre au moyen d'un dispositif de suspension élastique permettant le déplacement de la plaque de renfort lorsqu'une force est exercée sur le coussin, la structure de support comportant en outre des moyens de butée agencés pour limiter le déplacement de la plaque de renfort vers ledit coussin. L'élément de siège comprend des moyens de retournement aptes à le déplacer entre une position de réception d'un passager et une position retournée.

Ainsi, lorsque le passager du véhicule se positionne sur un siège comprenant un tel élément de siège, la force exercée sur le coussin provoque le déplacement de la plaque de renfort et le coussin s'affaisse. Ainsi, le siège possède de bonnes performances d'amortissement et le siège est confortable.

En outre, un tel élément de siège permet de répartir les charges exercées sur le coussin et de réduire l'inconfort dû aux vibrations transmises lorsque le véhicule roule.

Enfin, lorsque l'élément de siège est dans sa position retournée dans laquelle le coussin est disposé en regard du plancher du véhicule, la plaque de renfort associée aux moyens de butée permet d'obtenir de bonnes caractéristiques de résistance à l'enfoncement. Ainsi, de lourdes charges peuvent être disposées sur la face de la structure de support opposée à la face de réception du coussin, sur le cadre ou sur la plaque de renfort.

Avantageusement, la structure de support présente une face de réception dudit coussin et une face opposée à ladite face de réception. La plaque de renfort est superposée au cadre, du côté de ladite face opposée et les dimensions de la plaque de renfort sont supérieures aux dimensions de l'ouverture du cadre de manière à ce que les moyens de butée soient constitués par les bords de ladite plaque de renfort et le cadre.

Ainsi, les moyens de butée sont simples à réaliser et les caractéristiques de résistance à l'enfoncement sont améliorées.

En outre, selon ce mode de réalisation, la face opposée peut être sensiblement plane permettant ainsi à ladite face opposée d'être totalement appropriée à la réception d'objet.

Avantageusement, le dispositif de suspension élastique est composé d'une nappe de suspension solidaire de la plaque de renfort et solidaire du cadre de part et d'autre de l'ouverture. La nappe de suspension est composée de ressorts en fils ou de ressorts à lames. On pourra également envisager d'utiliser des bandelettes ou des fils entrecroisées possédant une certaine élasticité.

Ainsi, un tel dispositif de suspension permet une excellente répartition des charges appliquées sur le coussin.

Avantageusement, l'élément de siège comporte un dispositif de guidage du déplacement de la plaque de renfort. Le dispositif de guidage comprend au moins un plot de guidage mobile en translation dans un orifice de guidage, ledit plot de guidage et ledit orifice de guidage étant respectivement solidaire de la plaque de renfort et du cadre. Dans un mode de réalisation préféré, le dispositif de guidage comprend au moins deux plots de guidage, lesdits plots étant respectivement disposés à proximité d'un premier bord de ladite plaque de renfort et à proximité d'un second bord opposé audit premier bord.

Ainsi, le dispositif de guidage permet à la plaque de renfort de se déplacer uniquement selon une direction sensiblement perpendiculaire au plan du coussin en évitant ainsi à la plaque de se décaler latéralement, ce qui affecterait le confort du siège.

Avantageusement, le plot de guidage possède à son extrémité libre une tête formant butée afin de limiter le mouvement dudit plot de guidage.

Ainsi, le mouvement de l'assise est également limité par une butée lorsqu'une force est exercée sur le siège et le plot de guidage ne peut pas se désengager de l'orifice.

Dans un mode de réalisation préféré, la plaque de renfort possède des fils de renfort s'étendant sensiblement entre deux bords opposés de ladite plaque de renfort, sur une face de ladite plaque de renfort disposé en regard dudit coussin

Ainsi, la plaque de renfort est rigidifiée afin d'améliorer sa résistance.

L'invention concerne également siège pour véhicule automobile comprenant un piètement destiné à être fixé au plancher du véhicule et au moins un élément de siège selon l'invention, monté articulé par rapport au piètement entre une position de réception d'un passager et une position retournée dans laquelle le coussin dudit élément de siège est disposé en regard du plancher du véhicule.

Dans un mode de réalisation, l'élément de siège forme l'assise dudit siège. Dans ce mode de réalisation, le siège peut comprendre uniquement une assise (siège du type strapontin) ou comprendre une assise et un dossier.

Dans un autre mode de réalisation de l'invention, l'élément de siège forme le dossier dudit siège.

Enfin dans un dernier mode de réalisation, le siège comprend deux éléments de sièges selon l'invention, formant l'assise et le dossier dudit siège, l'assise et/ou le dossier étant montés articulés par rapport au piètement entre une position de réception d'un passager et une position retournée dans laquelle le coussin dudit élément de siège est disposé en regard du plancher du véhicule.

D'autres objets et avantages de l'invention apparaîtront au cours de la description qui suit, faite en référence aux dessins annexés, dans lesquels :
- la figure 1 est une vue en perspective d'un siège selon l'invention dans une position de réception d'un passager ;
- la figure 2 est une vue en perspective du siège selon l'invention, le dossier et l'assise étant en position retournée ;
- la figure 3 est une vue détaillée d'une structure de support de coussin d'une assise selon l'invention ;
- La figure 4 est une vue en coupe selon l'axe IV-IV de la figure 3 représentant un élément de siège selon l'invention, la partie gauche de la figure représentant la déformation du coussin et le mouvement de la plaque de renfort lorsqu'une force P1 est appliquée sur le coussin, la partie droite représentant la plaque de renfort en butée lorsqu'une force P2 est appliquée sur la plaque de renfort, du côté opposé audit coussin ; et
- La figure 5 est une vue détaillée d'un dispositif de guidage de la plaque de renfort selon un mode réalisation de l'invention.

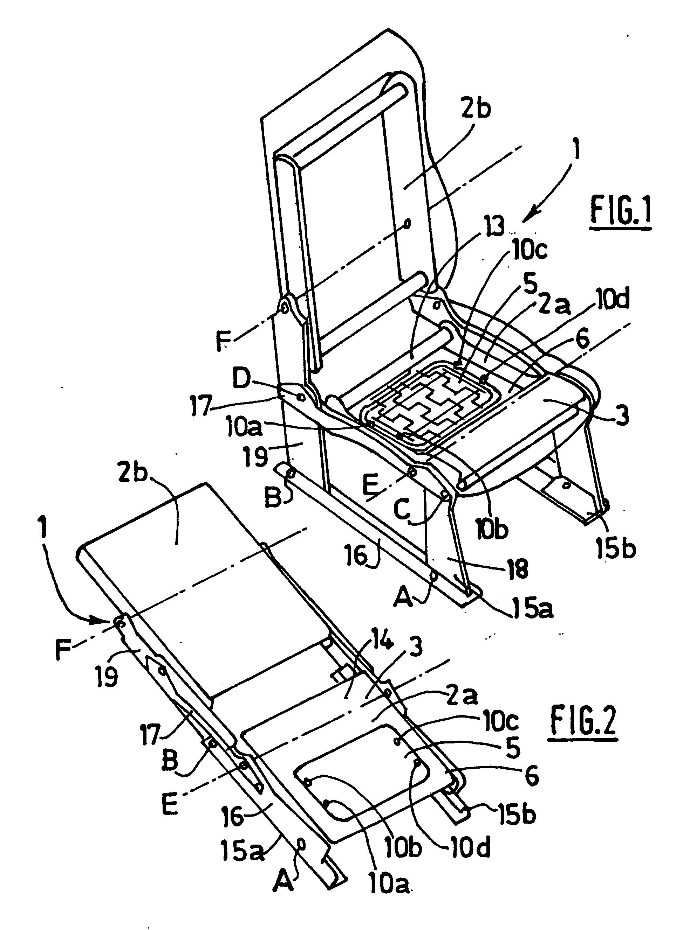

Les figures 1 et 2 représentent un siège 1 pour véhicule automobile selon un mode de réalisation de l'invention. Sur la figure 1, le siège 1 est représenté dans sa position de réception d'un passager alors que sur la figure 2, le siège est représenté dans sa position « plane » dans laquelle le coussin 4 de l'assise 2a et le coussin 4 du dossier 2b sont disposés contre le plancher du véhicule. On notera que le siège 1 peut également être disposé dans une configuration « tablette », non représenté, dans laquelle le dossier 2b est retourné et forme une tablette permettant la réception d'objets.

Dans le mode de réalisation représenté, le piètement du siège est composé de deux cadres 15a, 15b, symétriques par rapport au plan de symétrie du siège 1, s'étendant de part et d'autre de l'assise 2a du siège 1. Chaque cadre 15a, 15b est composé d'un rail 16 destiné à être fixé au plancher du véhicule, d'un élément rigide 17 sensiblement horizontal, d'un élément rigide avant 18 et d'un élément rigide arrière 19. L'élément rigide avant 18 et l'élément rigide arrière 19 sont montés en rotation sur le rail 16 respectivement selon un premier axe A et un second axe B et sont montés en rotation sur l'élément rigide 17 sensiblement horizontal respectivement selon un troisième C et un quatrième axe D. Les quatre axes A, B, C et D forment un quadrilatère déformable. Le siège 1 possède au moins un moyen de verrouillage permettant de bloquer la rotation selon un des quatre premiers axes A, B, C et D. Bien entendu l'homme du métier pourra appliquer l'invention à d'autres types de piètement sans pour autant sortir du champ de l'invention.

Des dispositifs d'articulation permettent de monter l'assise 2a en rotation sur l'élément rigide 17 autour d'un cinquième axe E et le dossier 2b est en rotation sur l'élément rigide arrière 19 autour d'un sixième axe F. Ainsi, le dossier 2b et l'assise 2a sont mobiles entre une position de réception d'un passager et une position retournée dans laquelle le coussin est disposé en regard du plancher du véhicule. Dans un mode de réalisation de l'invention non représenté, le dossier 2b peut être directement monté articulé sur l'assise 2a.

Sur le mode de réalisation représenté sur les figures 1 et 2, seule l'assise 2a est un élément de siège selon l'invention. On notera cependant que l'assise 2a et/ou le dossier 2b peuvent être des éléments de siège selon l'invention.

On remarquera également que l'invention ne se limite pas à un siège 1 tel qu'il est détaillé ci-dessus mais peut également s'appliquer à tous type de sièges possédant un élément de siège mobile entre une position d'utilisation et une position retournée. En effet, l'invention est, par exemple, également applicable à un siège du type strapontin possédant uniquement un élément de siège selon l'invention, formant l'assise dudit strapontin.

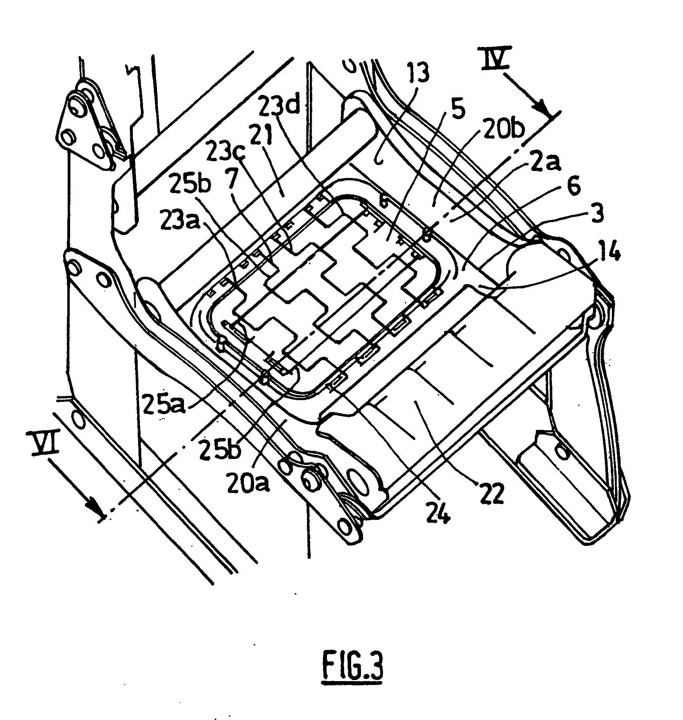

La figure 3 représente de façon détaillée un élément de siège selon l'invention. L'élément de siège est composé d'un coussin 4, non représenté sur la figure 3, et d'une structure de support 3 dudit coussin. Le coussin 4 est un élément en mousse recouvert de tissu.

La structure de support 3 est composée d'un cadre 6 présentant une ouverture et d'une plaque de renfort 5 recouvrant au moins en partie ladite ouverture.

Dans le mode de réalisation représenté sur les figures 1 et 3, le cadre 6 est composé d'une plaque de fond 14 fixée sur une armature 13. L'armature 13 est sensiblement rectangulaire et formée de deux éléments latéraux 20a, 20b parallèles, d'un élément d'armature arrière 21 et d'un élément d'armature avant 22.

L'ouverture est disposée sensiblement dans la zone de réception de la charge du passager. Dans le mode de réalisation représenté, l'ouverture est formée dans la plaque de fond 14.

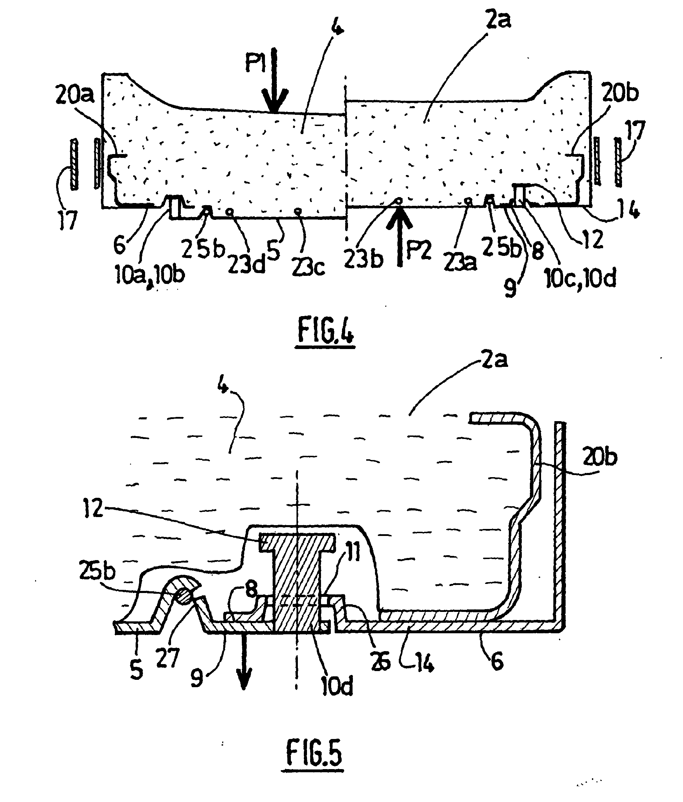

La plaque de renfort 5 est montée sur ledit cadre 4 au moyen d'un dispositif de suspension élastique 7. Ainsi, tel qu'il est illustré sur la partie gauche de la figure 4, lorsque le passager se positionne sur un tel élément de siège, la force P1 exercée sur le coussin 4 provoque le déplacement de la plaque de renfort 5 et le coussin 4 s'affaisse

Avantageusement, le dispositif de suspensions élastique 7 est composé d'une nappe de suspension solidaire de la plaque de fond 14, qui s'étend entre deux bord opposés de l'ouverture et est solidaire de la plaque de renfort 5.

Dans le mode de réalisation représenté sur la figure 3, la nappe de suspension est composée de quatre fils de fer élastiques 23a, 23b 23c et 23d ondulés, fixés de part et d'autre de l'ouverture. Avantageusement, les moyens de fixation 24 sont des rainures formées dans la plaque de fond 14 dudit cadre 6 et permettant de coincer les extrémités des fils 23a, 23b, 23c, 23d.

Dans d'autres modes de réalisation non représentés, la nappe de suspension peut être formé de ressorts à lames, d'éléments en matériau élastique tel que du caoutchouc ou de lattes en matériau souple. On pourra également envisager d'utiliser des bandelettes ou des fils entrecroisées possédant une certaine élasticité.

La structure de support 3 comporte des moyens de butée permettant de limiter le déplacement de ladite plaque de renfort 5 vers ledit coussin 4. Ainsi, l'élément de siège est agencé pour recevoir de lourdes charges sur la face opposé au coussin 4. Dans un mode de réalisation préféré, la plaque de renfort 5 est disposée sur le côté opposé à la face de réception du passager et est superposée audit cadre 6. En outre, comme représenté sur la figure 4, les dimensions de la plaque 5 sont supérieures aux dimensions de l'ouverture du cadre 6 de manière à ce que les bords 9 de la plaque de renfort 5 viennent en butée contre le cadre 6 au niveau de la périphérie 8 de l'ouverture.

Ainsi, lorsqu'une charge P2 est appliquée sur la plaque de renfort 5, tel que représenté sur la figure 4, le déplacement de la plaque 5 vers le coussin 6 est limité afin de ne pas endommager le coussin 6.

Dans un mode de réalisation préféré de l'invention, la plaque de renfort 5 possède des fils de renfort élastiques 25a, 25 b s'étendant sensiblement entre deux bords opposés de ladite plaque de renfort 5. Les fils 25a, 25b sont disposés en regard dudit coussin et fixés au moyen de rainures 27 solidaires de la plaque de renfort 5 et permettant de coincer les extrémités desdits fils 25a, 25b.

Avantageusement, un dispositif de guidage permet de guider le déplacement de la plaque de renfort 5. Comme représenté de façon détaillée sur la figure 5, le dispositif de guidage est composé d'un plot 10a, 10b, 10c,10d solidaire de la plaque de renfort 5 et d'un orifice de guidage 11 formé dans la plaque de fond 14 dudit cadre 6.

Dans le mode de réalisation représenté, le dispositif de guidage est composé de quatre plots 10a, 10b, 10c, 10d solidaires de ladite plaque de renfort 5, mobiles en translation dans les orifices de guidage 11. Sur les figures 1, 3 et 4, on remarque que deux plots de guidage 10a, 10b sont disposés à proximité d'un premier bord de la plaque de renfort 5 et deux autres plots 10c, 10d sont disposés à proximité d'un second bord, opposé audit premier bord.

Avantageusement, les plots de guidage 10a, 10b, 10c, 10d possèdent à leur extrémité libre une tête 12 de section plus importante formant butée contre les bords des orifices 11 de guidages. Ainsi, le mouvement de la plaque de renfort 5 est également limité lorsqu'une charge trop importante est exercée sur le coussin 4. En outre, le dispositif de butée permet d'empêcher un désengagement des plots 10a, 10b, 10c, 10d desdits orifices de guidage 11.

On remarquera que la plaque de renfort 5 est de préférence réalisée par emboutissage et les plots de guidages 10a, 10b, 10c, 10d peuvent être formés lors de l'opération d'emboutissage ou fixés ou collés sur la plaque de renfort 5 lors d'une étape ultérieure

Dans le mode de réalisation représenté sur la figure 5, une nervure 26 est formée sur la plaque de fond 14, à proximité de la périphérie 8 de l'ouverture afin de renforcer la rigidité de la plaque de fond 14.

## Revendications

1. Elément de siège, tel qu'une assise (2a) ou un dossier (2b) de siège (1) pour véhicule automobile, comportant une structure de support (3) supportant un coussin (4), ladite structure de support (3) étant renforcée par une plaque de renfort (5), **caractérisé en ce que** la structure de support (3) comprend un cadre (6) présentant une ouverture, la plaque de renfort (5) recouvrant au moins une partie de ladite ouverture et étant montée sur le cadre (6) au moyen d'un dispositif de suspension élastique (7) permettant le déplacement de la plaque de renfort (5) lorsqu'une force est exercée sur le coussin (4), la structure de support (3) comportant en outre des moyens de butée agencés pour limiter le déplacement de la plaque de renfort (5) vers ledit coussin (4), ledit élément de siège étant **caractérisé en outre en ce qu'**il comprend des moyens de retournement aptes à le déplacer entre une position de réception d'un passager et une position retournée.

2. Elément de siège selon la revendication 1, **caractérisé en ce que** la structure de support (3) présente une face de réception dudit coussin (4) et une face opposée à ladite face de réception, la plaque de renfort (5) étant superposée au cadre (6), du côté de ladite face opposée, les dimensions de la plaque de renfort (5) étant supérieures aux dimensions de l'ouverture du cadre (6) de manière à ce que les moyens de butée soient constitués par les bords (9) de ladite plaque de renfort (5) et le cadre (6).

3. Elément de siège selon la revendication 1 ou 2, **caractérisé en ce que** le dispositif de suspensions élastique (7) est composé d'une nappe de suspension solidaire de la plaque de renfort (5) et solidaire du cadre (6) de part et d'autre de l'ouverture.

4. Elément de siège selon la revendication 3, **caractérisée en ce que** la nappe de suspension est composée de ressorts en fils, de ressorts à lames ou de bandelettes entrecroisées.

5. Elément de siège selon l'une des revendications 1 à 4, **caractérisé en ce qu'**il comporte un dispositif de guidage du déplacement de la plaque de renfort (5).

6. Elément de siège selon la revendication 5, **caractérisé en ce que** le dispositif de guidage comprend au moins un plot de guidage (10a, 10b, 10c, 10d) mobile en translation dans un orifice de guidage (11) , ledit plot de guidage (10a, 10b, 10c, 10d) et ledit orifice de guidage (11) étant respectivement solidaire de la plaque de renfort (5) et du cadre (6).

7. Elément de siège selon la revendication 5, **caractérisé en ce que** le plot de guidage (10a, 10b, 10c, 10d) possède à son extrémité libre une tête (12) formant butée afin de limiter le mouvement dudit plot de guidage (10a, 10b, 10c, 10d).

8. Elément de siège selon l'une des revendications 6 ou 7, **caractérisé en ce que** le dispositif de guidage comprend au moins deux plots de guidage(10a, 10b, 10c, 10d), lesdits plots (10a, 10b, 10c, 10d) étant disposés respectivement à proximité d'un premier bord de ladite plaque de renfort (5) et à proximité d'un second bord opposé audit premier bord.

9. Elément de siège selon l'une des revendications 1 à 7, **caractérisée en ce que** la plaque de renfort (5) possède des fils de renfort élastiques (25a, 25b) s'étendant sensiblement entre deux bords opposés de ladite plaque de renfort (5), sur une face de la plaque de renfort (5) disposé en regard dudit coussin (4).

10. Elément de siège selon l'une des revendications 1 à 8, **caractérisé en ce que** ledit cadre (6) comprend une armature (13) sensiblement rectangulaire et une planque de fond (14) fixé à ladite armature (13), l'ouverture étant formé dans la plaque de fond (14).

11. Siège (1) pour véhicule automobile comprenant un piètement destiné à être fixé au plancher du véhicule **caractérisé en ce qu'**il comporte au moins un élément de siège selon l'une des revendications 1 à 10, monté articulé par rapport au piètement entre une position de réception d'un passager et une position retournée dans laquelle le coussin (4) dudit élément de siège est disposé en regard du plancher du véhicule.

12. Siège (1) pour véhicule automobile selon la revendication 11, **caractérisé en ce que** ledit élément de siège forme l'assise (2a) dudit siège (1).

13. Siège pour véhicule automobile selon la revendication 11, **caractérisé en ce que** ledit élément de siège forme le dossier (2b) dudit siège (1)

14. Siège (1) pour véhicule automobile selon la revendication 11, **caractérisé en ce qu'**il comprend deux éléments de sièges selon l'une des revendications 1 à 10, formant l'assise (2a) et le dossier (2b) dudit siège, l'assise et/ou le dossier étant montés articulés par rapport au piètement entre une position de réception d'un passager et une position retournée dans laquelle le coussin (4) dudit élément de siège est disposé en regard du plancher du véhicule.

## Claims

1. Motor vehicle seat element, such as a seat part (2a) or a back (2b) of a seat (1), including a support structure (3), supporting a cushion (4), said support structure (3) being reinforced by a reinforcing plate(5), **characterised in that** the support structure (3) includes a frame (6) having an opening, the reinforcing plate (5) covering at least a part of said opening and being mounted out of the frame (6) using an elastic suspension device (7) allowing the motion of the reinforcing plate (5) when a force is exerted on the cushion (4), the support structure (3) further including stop means so arranged as to limit the displacement of the reinforcing plate (5) towards said cushion (4), such seat element being further **characterised in that** it includes returning means capable to position it between a passenger receiving position and a turned position.

2. A seat element according to claim 1, **characterised in that** the support structure (3) has a receiving face of said cushion (4) and a face opposite the receiving face, the reinforcing plate (5) being superimposed to the frame (6) on the opposite face side, the dimensions of the reinforcing plate (5) being greater than the dimensions of the frame opening (6) so that the stop means are composed of the edges (9) of said reinforcing plate (5) and the frame (6).

3. A seat element according to claim 1 or 2, **characterised in that** the elastic suspension device (7) is composed of a suspension net integral with the reinforcing plate (5) and integral with the frame (6) on either side of the opening.

4. A seat element according to claim 3, **characterised in that** the suspension net is composed of wire springs, leaf springs or interweaved strips.

5. A seat element according to one of claims 1 to 4, **characterised in that** it includes a device for guiding the motion of the reinforcing plate (5).

6. A seat element according to claim 5, **characterised in that** the guiding device comprises at least a guiding pad (10a, 10b, 10c,10d) movable in translation in a guiding port (11), said guiding pad (10a, 10b, 10c, 10d) and said guiding port (11) being respectively integral with the reinforcing plate (5) and the frame (6).

7. A seat element according to claim 5, **characterised in that** the guiding pad (10a, 10b, 10c, 10d) has, at its free end, a stop-forming head (12) in order to limit the motion of said guiding pad (10a, 10b, 10c, 10d).

8. A seat element according to one of claims 6 or 7, **characterised in that** the guiding device comprises at least two guiding pads (10a, 10b, 10c, 10d), said pads (10a, 10b, 10c, 10d) being respectively positioned close to a first edge of said reinforcing plate (5) and close to a second edge opposite said first edge.

9. A seat element according to one of claims 1 to 7, **characterised in that** the reinforcing plate (5) has elastic reinforcing wires (25a, 25b) extending substantially between two opposite edges of said reinforcing plate (5), on a face of the reinforcing plate (5) positioned opposite said cushion (4).

10. A seat element according to one of claims 1 to 8, **characterised in that** said frame (6) includes a substantially rectangular armature (13) and a bottom plate (14) fixed to said armature (13), the opening being formed in the bottom plate (14).

11. A seat (1) for a motor vehicle comprising a base intended to be fixed to the floor of the vehicle, **characterised in that** it includes at least one seat element according to one of claims 1 to 10, mounted to be hinged with respect to the base between a passenger receiving position and a turned position wherein the cushion (4) for the said seat element is positioned opposite the floor of the vehicle.

12. A seat (1) for a motor vehicle according to claim 11, **characterised in that** said seat element is a seat part (2a) of said seat (1).

13. A seat for a motor vehicle according to claim 11, **characterised in that** said seat element is a back (2b) of said seat (1).

14. A seat (1) for a motor vehicle according to claim 11, **characterised in that** it includes two seat elements according to one of claims 1 to 10, forming the seat part (2a) and the back (2b) of said seat, the seat part and/or the back being mounted hinged with respect to the base between a passenger receiving position and a turned position when the cushion (4) of said seat element is positioned at right angles with the floor of the vehicle.

## Patentansprüche

1. Sitzelement wie eine Sitzfläche (2a) oder eine Rückenlehne (2b) eines Sitzes (1) für Kraftfahrzeuge, bestehend aus einer ein Kissen (4) tragenden Tragstruktur (3), wobei die genannte Tragstruktur (3) von einer Verstärkungsplatte (5) verstärkt ist, **dadurch gekennzeichnet, dass** die Tragstruktur (3) einen eine Öffnung aufweisenden Rahmen (6) umfasst, wobei die Verstärkungsplatte (5) mindestens einen Teil der genannten Öffnung bedeckt und an dem Rahmen (6) montiert ist mittels einer elastischen Aufhängung (7), die das Verschieben der Verstärkungsplatte (5) ermöglicht, wenn eine Kraft auf das Kissen (4) ausgeübt wird, wobei die Tragstruktur (3) ferner Anschlagmittel umfasst, die das Verschieben der Verstärkungsplatte (5) zum genannten Kissen (4) hin begrenzen sollen, wobei das genannte Sitzelement ferner **dadurch gekennzeichnet ist, dass** es Umkehrmittel umfasst, die es zwischen einer Aufnahmeposition eines Passagiers und einer umgekehrten Position verschieben kann.

2. Sitzelement gemäß Anspruch 1, **dadurch gekennzeichnet, dass** die Tragstruktur (3) eine Aufnahmeseite für das genannte Kissen (4) und eine der genannten Aufnahmeseite gegenüberliegende Seite aufweist, wobei die Verstärkungsplatte (5) auf der Seite der genannten gegenüberliegenden Seite dem Rahmen (6) überlagert ist, wobei die Abmessungen der Verstärkungsplatte (5) größer sind als die Abmessungen der Öffnung des Rahmens (6), so dass die Anschlagmittel von den Rändern (9) der genannten Verstärkungsplatte (5) und dem Rahmen (6) gebildet werden.

3. Sitzelement gemäß Anspruch 1 oder 2, **dadurch gekennzeichnet, dass** die elastische Aufhängung (7) aus einer Aufhängungsmatte besteht, die auf beiden Seiten der Öffnung fest mit der Verstärkungsplatte (5) und dem Rahmen (6) verbunden ist.

4. Sitzelement gemäß Anspruch 3, **dadurch gekennzeichnet, dass** die Aufhängungsmatte aus Drahtfedern, Blattfedern oder Kreuzbändchen besteht.

5. Sitzelement gemäß einem der Ansprüche 1 bis 4, **dadurch gekennzeichnet, dass** es eine Führungsvorrichtung für das Verschieben der Verstärkungsplatte (5) umfasst.

6. Sitzelement gemäß Anspruch 5, **dadurch gekennzeichnet, dass** die Führungsvorrichtung mindestens ein durch eine Führungsöffnung (11) hindurch mobiles Führungsstück (10a, 10b, 10c, 10d) umfasst, wobei das genannte Führungsstück (10a, 10b, 10c, 10d) und die genannte Führungsöffnung (11) jeweils fest mit der Verstärkungsplatte (5) und dem Rahmen (6) verbunden sind.

7. Sitzelement gemäß Anspruch 5, **dadurch gekennzeichnet, dass** das Führungsstück (10a, 10b, 10c, 10d) an seinem freien Ende einen als Anschlag dienenden Kopf (12) aufweist, um die Bewegung des genannten Führungsstücks (10a, 10b, 10c, 10d) zu begrenzen.

8. Sitzelement gemäß einem der Ansprüche 6 oder 7, **dadurch gekennzeichnet, dass** die Führungsvorrichtung mindestens zwei Führungsstücke (10a, 10b, 10c, 10d) umfasst, wobei die genannten Führungsstücke (10a, 10b, 10c, 10d) jeweils in der Nähe eines ersten Rands der genannten Verstärkungsplatte (5) und in der Nähe eines zweiten, dem genannten ersten Rand gegenüberliegenden Rand angeordnet sind.

9. Sitzelement gemäß einem der Ansprüche 1 bis 7, **dadurch gekennzeichnet, dass** die Verstärkungsplatte (5) elastische Verstärkungsdrähte (25a, 25b) aufweist, die sich etwa zwischen zwei gegenüberliegenden Rändern der genannten Verstärkungsplatte (5) auf einer gegenüber dem genannten Kissen (4) liegenden Seite der Verstärkungsplatte (5) erstrecken.

10. Sitzelement gemäß einem der Ansprüche 1 bis 8, **dadurch gekennzeichnet, dass** der genannte Rahmen (6) eine etwa rechteckige Armatur (13) und eine an der genannten Armatur (13) befestigte Rückenplatte (14) umfasst, wobei die Öffnung in der Rückenplatte (14) ausgebildet ist.

11. Sitz (1) für Kraftfahrzeuge, mit einem Fußgestell, das am Boden des Fahrzeugs befestigt werden kann, **dadurch gekennzeichnet, dass** er mindestens ein Sitzelement gemäß einem der Ansprüche 1 bis 10 umfasst, das in Bezug auf das Fußgestell gelenkig montiert ist zwischen einer Aufnahmeposition eines Passagiers und einer umgekehrten Position, in der das Kissen (4) des genannten Sitzelements gegenüber dem Boden des Fahrzeugs angeordnet ist.

12. Sitz (1) für Kraftfahrzeuge gemäß Anspruch 11, **dadurch gekennzeichnet, dass** das genannte Sitzelement die Sitzfläche (2a) des genannten Sitzes (1) bildet.

13. Sitz (1) für Kraftfahrzeuge gemäß Anspruch 11, **dadurch gekennzeichnet, dass** das genannte Sitzelement die Rückenlehne (2b) des genannten Sitzes (1) bildet.

14. Sitz (1) für Kraftfahrzeuge gemäß Anspruch 11, **dadurch gekennzeichnet, dass** er zwei Sitzelemente gemäß einem der Ansprüche 1 bis 10 aufweist, die die Sitzfläche (2a) und die Rückenlehne (2b) des genannten Sitzes bilden, wobei die Sitzfläche und/oder die Rückenlehne in Bezug auf das Fußgestell gelenkig montiert ist zwischen einer Aufnahmeposition eines Passagiers und einer umgekehrten Position, in der das Kissen (4) des genannten Sitzelements gegenüber dem Boden des Fahrzeugs angeordnet ist.
